# EUROPÄISCHE PATENTSCHRIFT

(11) **EP 3 465 106 B1**
(45) Veröffentlichungstag und Bekanntmachung des Hinweises auf die Patenterteilung: **23.02.2022**
(21) Anmeldenummer: 17734666.5
(22) Anmeldetag: 20.06.2017
(51) Int. Cl.: G01F 23/00, H01H 36/00

(54) **FAHRZEUG MIT ANZEIGEPANEL ZUM ABLESEN VON FÜLLSTÄNDEN**
VEHICLE COMPRISING A DISPLAY PANEL FOR READING FILL LEVELS
VÉHICULE MUNI D'UN PANNEAU D'AFFICHAGE PERMETTANT LA LECTURE DE NIVEAUX

(30) Priorität: 28.07.2016 DE 102016213898
(43) Veröffentlichungstag der Anmeldung: 10.04.2019
(73) Patentinhaber: Siemens Mobility GmbH, 81739 München (DE)
(72) Erfinder: SCHLESS, Günther, 46485 Wesel (DE)
(86) Internationale Anmeldenummer: PCT/EP2017/065022
(87) Internationale Veröffentlichungsnummer: WO 2018/019476

(56) Entgegenhaltungen:
- WO-A1-2009/048569
- DE-A1- 19 955 077
- DE-A1-102008 055 901
- FR-A1- 2 704 945
- JP-A- S6 345 678
- JP-A- 2001 272 266
- US-A- 3 906 476
- US-A- 5 570 688

## Beschreibung

Die Erfindung betrifft ein Fahrzeug mit einem Anzeigepanel zum Ablesen von Füllständen sowie ein Verfahren zum Ablesen von Füllständen eines Fahrzeugs.

Kabinen, insbesondere WC-Kabinen, bzw. Nasszellen in Schienenfahrzeugen des Nah- und Fernverkehrs benötigen zum Betrieb Frisch- und Abwasserbehälter. Dabei wird das Frischwasser im Wesentlichen zum Spülen von WCs und Urinalen benutzt. Zusätzlich werden auch Handwaschbecken und ausstattungsabhängig auch eine Wasserausgabe zur Realisierung einer Bidetfunktion am WC mit Frischwasser versorgt. Der Abwasserbehälter sammelt dabei das gebrauchte Wasser incl. der eingebrachten Flüssigkeiten und Feststoffe.

An Servicepunkten des Betreibers werden Frischwasserbehälter aus einer stationären Trinkwasserversorgung befüllt sowie Abwasserbehälter abgesaugt und typischerweise in das öffentliche Abwassernetz entleert.

Abhängig von der Ausstattung des Fahrzeugs und den vorherrschenden Umweltbedingungen ist es nicht unüblich, den Frischwassertank sowie die Frischwasserverrohrung des Schienenfahrzeuges bei Frost bzw. bei Frostgefahr in den Abwasserbehälter oder im Falle von Schienenfahrzeugen ins Gleisbett zu entleeren. Das kann beispielsweise manuell oder automatisch erfolgen, wobei die Automatiktemperatur- oder ereignisgesteuert ausgeführt werden kann.

Gleiches gilt für die Frisch- und Abwasserbehälter der Wasch- und Duschräume von Reisezugwagen sowie der Bordküchen, auch als Galley bezeichnet, in Speisewagen.

Allen Anwendungen ist gemeinsam, dass der Verbrauch von Frischwasser sowie das angefallene Abwasservolumen stark von individuellen Angewohnheiten und Bedürfnissen der Fahrgäste, der Wetterlage und den Betriebsbedingungen des Fahrzeuges abhängig ist und damit im Einzelfall schwer bis kaum vorhersehbar sind. Um einen planmäßigen und störungsfreien Betrieb zu gewährleisten, müssen die Füllstände der Frisch- und Abwasserbehälter regelmäßig kontrolliert und ggf. befüllt und/oder entleert werden.

Üblicherweise geschieht Entleerung und Befüllung in der Nachtabstellung durch das Servicepersonal. Zur Kontrolle der Füllstände der Flüssigkeitsbehälter ist es bei aktuellen Fahrzeugen notwendig, dass eine Spannungsversorgung eingeschaltet ist. Bei Schienenfahrzeugen ist eine Spannungsversorgung gewähreistet, wenn das Schienenfahrzeug aufgebügelt ist, d. h. wenn der Stromabnehmer gehoben ist und dabei zur Spannungsversorgung mit einer stromführenden Leitung kontaktiert, oder wenn das Schienenfahrzeug an einer Ladestation abgestellt ist. An Fahrzeuge, die aus betrieblichen Gründen oder als Energiesparmaßnahme abgebügelt abgestellt werden, ist eine Kontrolle des Füllstandes durch Ablesen der Füllstandanzeige ohne weitere Maßnahmen nicht möglich.

In alten Fahrzeugen wurden typischerweise Füllstände über mechanische Verbindungselemente permanent und unabhängig vom Energiestatus, Steuerungen und Messequipment außen am Fahrzeug angezeigt. Eine Fernabfrage durch das landseitige Servicepersonal oder die Weitermeldung von Füllständen incl. Vorwarnung von Engpässen zum Triebfahrzeugführer ist nachteilig mit mechanischen Systemen jedoch nicht möglich.

In neueren Fahrzeugen werden die Füllstände von Behältern bzw. Tanks in Stufen oder als Analogsignal von Sensoren erfasst und nach einer entsprechenden Aufbereitung an elektrische Anzeigen ausgegeben und/oder an die Zugsteuerung weitergemeldet. Dabei funktionieren die außen am Fahrzeug angebrachten Anzeigen jedoch nur, wenn Sensorik, Auswerteelektronik und Anzeige mit Spannung versorgt werden.

Die Anzeige der Füllstände erfolgt bei bahnerprobten Lösungen mittels einer sogenannten Bandanzeige auf einem Anzeigepanel. Dabei werden Leuchtdioden (LEDs) in einer Leiste angeordnet und auf einem Anzeigepanel betrieben. Der Füllstand eines Behälters bzw. Tanks wird als Lichtkette permanent angezeigt oder aber auch zeitlich begrenzt durch Drücken eines Tasters, häufig eines Piezoschalters. Zusätzlich können besondere Füllstände wie 0 %, 80 % und 100 % als Einzelsignal angezeigt werden. Piezoschalter sind jedoch nicht in der Lage, die Spannungsversorgung der Messelektrik einzuschalten. Nachteilig bei diesem System kann das Servicepersonal ferner an spannungsfrei abgestellten Fahrzeugen, also beispielsweise bei abgebügelten Schienenfahrzeugen, die Füllstände von Behältern nicht ermitteln. Der Servicemitarbeiter muss also nachteilig den Zug dafür betreten und die Messelektrik aktivieren, um einen Füll- oder Absaugbedarf für die Tankanlage festzustellen. Erst danach kann das Schienenfahrzeug wieder spannungsfrei gemacht werden.

Um diese zusätzlichen Wege und Zeiten zu vermeiden, werden bisweilen Taster außen am Fahrzeug angebracht, die für einen begrenzten Zeitraum die Messelektrik aus der Fahrzeugbatterie mit Spannung versorgen und damit die Ermittlung der Füllstände in den Behältern von außen ermöglichen. Bei dieser Lösung müssen außen zusätzliche Elemente zum Schalten eines Stromkreises angebracht und Kabel bis dorthin geführt werden. Eine Integration von für den Außeneinsatz geeigneter Taster in die Bandanzeige ist auf Grund der Bauform und Baugröße nachteilig nicht möglich. Ein solcher Taster benötigt in seiner exponierten Lage im Unterflurbereich mechanische Widerstandsfähigkeit gegen äußere Krafteinwirkung und eine im aggressiven chemischen Umfeld einer Waschanlage langfristig wirksamen Abdichtung. Diese Anforderungen sind auf kleinem Bauraum jedoch nicht umsetzbar.

Autarke Spannungsversorgung zur Aktivierung der Messschaltung z. B. durch Akku oder Kondensator haben sich in der Praxis nicht bewährt. Sie sind wartungsbedürftig und ihre Lebensdauer passt nicht beispielsweise zu bahnüblichen Anforderungen.

Die Offenlegungsschrift FR 2 704 945 A1 lehrt ein Fahrzeug mit einer auf einer Außenseite des Fahrzeugs angeordneten Anzeige zur Anzeige eines Füllstands eines Tanks im Fahrzeug. Die Spannungsversorgung erfolgt über eine Fahrzeugbatterie und wird aus Cockpit des Fahrzeugs gesteuert. Die Druckschrift JP 2001 272266 A offenbart einen Füllstandsmesser. Das Dokument WO 2009/048569 A1 zeigt eine Vorrichtung zur Messung und Anzeige eines Drucks in einem Druckbehälter. Das Dokument DE 199 55 077 A1 offenbart ein Display außerhalb eines Tanks eines Fahrzeugs, das über einen Reed-Schalter, der sich in der Nähe des Displays befindet, und einen Magneten gesteuert wird.

Die Aufgabe besteht somit darin, ein Fahrzeug mit einem Anzeigepanel zum Ablesen von Füllständen vorzuschlagen, das ein einfaches und komfortables Bedienen zum Ablesen von Füllständen ermöglicht.

Erfindungsgemäß wird ein Fahrzeug vorgeschlagen, welches eine Spannungsversorgungsquelle zur Bereitstellung einer elektrischen Spannung umfasst. Ferner weist das Fahrzeug einen Füllstandmesser zur Messung eines Füllstandes eines Flüssigkeitsbehälters auf sowie eine Auswerteelektronik, die derart ausgebildet ist, dass diese den Füllstand verarbeitet und an ein Anzeigepanel übergibt. Zudem weist das Fahrzeug ein Anzeigepanel zum Anzeigen eines Füllstandes an. Das Anzeigepanel wiederum umfasst eine Anzeigekomponente zum Anzeigen eines Füllstandes. Ferner weist das Anzeigepanel einen Reed-Kontakt auf, der dazu eingerichtet ist, bei Anlegung eines Magnetfelds die Spannungsversorgungsquelle für die Anzeigekomponente und für die Auswerteelektronik des Füllstandmessers zur Messung eines Füllstandes zu schalten.

Das Fahrzeug mit dem Anzeigepanel hat den Vorteil, dass es auf Grund der magnetischen Funktionsweise robust ist gegenüber klimatischen Einflüssen wie Schnee, Eis und extreme Temperaturen. Daher ist ein solches Anzeigepanel auch besonders als Außenanzeige an Fahrzeugen geeignet. Reed-Kontakte haben ferner eine geringe Baugröße, so dass diese in den Bauraum üblicher Anzeigepanel bzw. Außenanzeigen eingebaut werden können. Sie sind zudem robust und einsatzsicher bei verhältnismäßig geringem Systempreis. Im Ruhezustand, d.h. im Zustand ohne angelegtem Magnetfeld, wird vorteilhaft eine Spannungsversorgungsquelle, beispielsweise eine Fahrzeugbatterie, nicht belastet und wird nur zum Ablesen der Füllstände kurzzeitig betätigt. Dadurch wird Energie eingespart. Ferner ist eine solche Implementierung resistent gegenüber Vandalismus.

Bevorzugt ist das Anzeigepanel an einer Außenseite des Fahrzeugs angebracht. Dadurch können vorteilhaft die Füllstände der Flüssigkeitsbehälter des Anzeigepanels von Servicemitarbeitern ohne Betreten des Fahrzeugs abgelesen werden.

Ferner kann eine zugeordnete Selbsthalteschaltung derart zur Verfügung gestellt werden, dass bei Entfernung des Magnetfeldes vom Reed-Kontakt für eine vorgegebene Wartezeit der Anzeigekomponente und der Auswerteelektronik eines zugeordneten Füllstandmessers zur Messung eines Füllstands eine jeweilige Spannung zur Verfügung gestellt wird. Typischerweise erfordert das Erfassen und Ablesen der Füllstände eine gewisse Beobachtungszeit, in der durch die Selbsthalteschaltung vorteilhaft eine weitere Spannungsversorgung gewährleistet wird. Ein angelegtes Magnetfeld ist nach einer ersten Initialisierung innerhalb einer Wartezeit nicht mehr erforderlich, was die Benutzung erleichtert. Die Länge der Wartezeit kann dabei eingestellt werden.

Die Anzeigekomponente des Fahrzeugs kann aus einer Kette von LEDs dargestellt sein. Solche Realisierungen werden auch Bandanzeigen genannt und liefern eine schnell ablesbare und anschauliche Darstellung des Füllstandes. Beispielsweise können 10 oder 20 LEDs dazu verwendet werden.

Das Anzeigepanel des Fahrzeugs kann in einem Gehäuse eingebracht sein. Als Material kann dabei beispielsweise Edelstahl Verwendung, dessen leichten magnetischen Eigenschaften die Funktionalität des Reed-Kontaktes nicht stört.

Das Anzeigepanel des Fahrzeugs kann als verschraubtes oder vergossenes Schalelement in das Gehäuse eingebracht sein.

Das Anzeigepanel des Fahrzeugs kann eine transparente Abdeckung aufweisen. Dadurch werden die Anzeigekomponente und der Reed-Kontakt vorteilhaft vor Vandalismus geschützt bei bestehender Sichtbarkeit der Anzeigekomponenten. Als Material kann dabei Glas oder auch transparente Kunststoffe Einsatz finden.

Ferner wird ein Verfahren zum Ablesen von einem Füllstand eines Fahrzeugs gemäß der folgenden Schritte beschrieben: In einem ersten Schritt a) wird ein Fahrzeug bereitgestellt nach einem der vorherigen Ausführungen. In einem zweiten b) Schritt wird ein Reed-Kontakt durch ein an den Reed-Kontakt angelegtes Magnetfeld betätigt, wobei dadurch eine Auswerteelektronik und eine Anzeigekomponente eines Anzeigepanels mit einer Spannung versorgt werden. In einem folgenden Schritt c) erfolgt das Ablesen der einen Anzeigekomponente zum Anzeigen eines Füllstandes.

Bevorzugt wird das angelegte Magnetfeld durch einen Permanentmagneten erzeugt. Dadurch kann die Bedienung für Servicemitarbeiter mittels eines kleinen Permanentmagneten deutlich erleichtert werden.

Das Fahrzeug ist bevorzugt ein motorbetriebenes Fahrzeug, besonders bevorzugt ein Schienenfahrzeug. Das Fahrzeug umfasst auch andere Verkehrsmittel, wie zum Beispiel Busse, Schiffe und Flugzeuge. Auch dort können Anzeigepanel zum Ablesen von Füllständen von Flüssigkeitsbehältern Verwendung finden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
Figur 1 ein erfindungsgemäßes Fahrzeug mit Anzeigepanel,
Figur 2 ein Reed-Kontakt des Standes der Technik nach einer ersten Ausführungsform,
Figur 3 ein Reed-Kontakt des Standes der Technik nach einer zweiten Ausführungsform und
Figur 4 eine schematische Darstellung des erfindungsgemäßen Verfahrens zum Ablesen von Füllständen eines Fahrzeugs.

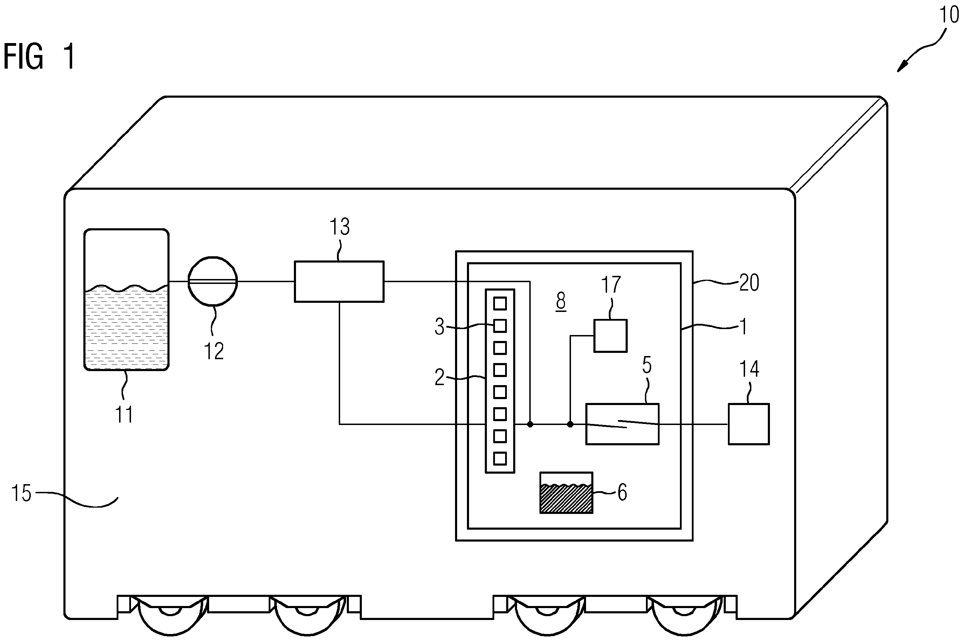

Figur 1 zeigt eine schematische Darstellung eines erfindungsgemäßen Fahrzeugs 10, das im Folgenden näher beschrieben wird. Das Fahrzeug 10 umfasst eine Spannungsversorgungsquelle 14 zur Bereitstellung einer elektrischen Spannung. Dies kann beispielsweise eine Fahrzeugbatterie sein. Das Fahrzeug umfasst ferner einen Füllstandmesser 12 zur Messung eines Füllstandes eines Flüssigkeitsbehälters 11. Es können auch hier alternativ mehrere Flüssigkeitsbehälter 11 und entsprechend mehrere Füllstandmesser 12 zur Verfügung gestellt werden. Als Flüssigkeit kommt dabei zum Beispiel Frisch- oder Abwasser in Frage, wobei die Erfindung nicht darauf beschränkt ist. Als Füllstandmesser 12 kommen sowohl induktive, kapazitive, mechanische, mechanisch-pneumatische oder auch optische Bestimmungstechniken in Frage, allerdings sind auch hier weitere Bestimmungstechniken von der Erfindung umfasst. Dem Füllstandmesser 12 ist eine Auswerteelektronik 13 zugeordnet, die den Füllstand des Flüssigkeitsbehälters 11 verarbeitet und an ein Anzeigepanel 1 übergibt. Die Auswerteelektronik kann auch in dem Füllstandmesser 12 integriert sein.

Das Anzeigepanels 1 zum Anzeigen eines Füllstandes wird im Folgenden näher beschrieben. Das Anzeigepanel 1 zum Anzeigen von Füllständen für Fahrzeuge umfasst eine Anzeigekomponente 2 zum Anzeigen eines Füllstandes. Es können auch mehrere Anzeigekomponenten 2 vorliegen, um beispielsweise verschiedene Füllstände von unterschiedlichen Flüssigkeitsbehältern anzuzeigen wie beispielsweise Abwasser- und Frischwasserbehälter. Das Anzeigepanel 1 umfasst zudem einen Reed-Kontakt 5, der bei Anlegung eines Magnetfeldes die Spannungsversorgungsquelle 14 für die Anzeigekomponente 2 und für die Auswerteelektronik 13 des zugeordneten Füllstandmessers 12 zur Messung des Füllstandes des Flüssigkeitsbehälters 11 schaltet.

Die Anzeigekomponente 2 wird ferner durch eine Kette von LEDs 3 beschrieben, die durch entsprechendes Aufleuchten einen Füllstand anzeigen. Beispielsweise können 10 oder 20 LEDs 3 dazu verwendet werden oder auch andere Anzahl. Alternativ können auch andere Darstellungen, beispielsweise analoge Darstellungen, verwendet werden.

Ferner ist eine graphische Anzeige 6 auf dem Anzeigepanel 1 angebracht, die zum Beispiel zur Unterscheidbarkeit von anderen Anzeigeeinheiten dient.

Das Anzeigepanel 1 ist wegen der magnetischen Funktionsweise robust gegenüber klimatischen Einflüssen wie Schnee, Eis und extreme Temperaturen. Daher ist ein solches Anzeigepanel 1 auch besonders als Außenanzeige an Fahrzeugen 10 geeignet. Reed-Kontakte 5 selbst haben ferner eine geringe Baugröße, so dass diese leicht in den Bauraum üblicher Anzeigepanel bzw. Außenanzeigen eingebaut werden können. Sie sind zudem robust und einsatzsicher bei verhältnismäßig geringem Systempreis. Im Ruhezustand, d.h. im Zustand ohne angelegtem Magnetfeld, wird vorteilhaft eine Spannungsversorgungsquelle, beispielsweise eine Fahrzeugbatterie, nicht belastet und wird nur zum Ablesen der Füllstände kurzzeitig betätigt. Dadurch wird Energie eingespart. Ferner ist eine solche Implementierung resistent gegenüber Vandalismus.

Das Anzeigepanel 1 ist ferner in einem Gehäuse 20 eingebracht. Ein solches Gehäuse 20 kann beispielsweise aus Edelstahl sein, dass bei nur geringer magnetischer Eigenschaften für eine Verwendung mit Reed-Kontakt 5 geeignet ist. Die Einbringung des Anzeigepanel 1 erfolgt beispielsweise als verschraubtes oder vergossenes Schalelement hinter einer transparenten Abdeckung 8 wie beispielsweise Glas oder auch transparenten Kunststoffe. Es kann aber alternativ auch bündig zur umliegenden Oberfläche des Gehäuses 20 ohne weitere Glasabdeckung 8 angebracht sein.

Die Funktionsweise des Reed-Kontaktes 5 im Zusammenhang mit den weiteren Komponenten wird nun näher beschrieben. Die Spannungsversorgungsquelle 14 wird durch den Reed-Kontakt 5 geschaltet, wobei dies durch ein an den Reed-Kontakt 5 angelegtes Magnetfeld initiiert wird. Dann steht durch Schließen des Reed-Kontaktes 5, wie in der Figur 1 schematisch dargestellt, sowohl der Anzeigekomponente 2 als auch der Auswerteelektronik 13 des Füllstandmessers 12 eine Spannung zur Verfügung. Der Füllstand des Flüssigkeitsbehälters 11 wird durch den Füllstandmesser 12 bestimmt und mittels der Auswerteelektronik 13 an die Anzeigekomponente 2 des Anzeigepanels 1 übergeben. Dort wird daraufhin der Füllstand für die Wartung und Kontrolle zum Ablesen durch die Anzeigekomponente 2 angezeigt.

Das Anzeigepanel 1 befindet sich an einer Außenseite 15 des Fahrzeugs 10. Dadurch kann die Betätigung bzw. Aktivierung des Reed-Kontaktes 5 vorteilhaft von außerhalb des Fahrzeugs 10 erfolgen. Die zur Ablesung der Füllstände autorisierten Personen müssen somit nicht mehr das Fahrzeug 10 zum Ablesen betreten, einschalten und nach dem Ablesen wieder ausschalten. Dadurch steigt der Wartungskomfort.

Ferner ist dem Anzeigepanel 1 eine Selbsthalteschaltung 17 zugeordnet, welche bevorzugt im Anzeigepanel 1 integriert ist. Alternativ kann die Selbsthalteschaltung 17 auch außerhalb des Anzeigepanels 1 im Fahrzeug 10 eingebracht sein. Die Selbsthalteschaltung 10 dient dazu, die Spannungsversorgung für eine gewisse Wartezeit nach initialer Aktivierung des Reed-Kontaktes 5 zu speichern, so dass trotz bereits erfolgter Deaktivierung des Reed-Kontaktes 5 durch Entfernung des magnetischen Feldes vom Reed-Kontakt 5 das Anzeigepanel 1 mit entsprechender Anzeigekomponente 2 sowie Auswerteelektronik 13 und Füllstandmesser 12 weiterhin mit Spannung versorgt werden und somit ein über einen längeren Zeitraum gewährtes Ablesen der Füllstände erfolgen kann. Dadurch wird der Komfort beim Ablesen der Füllstände erhöht, da nicht über einen längeren Zeitraum das Magnetfeld am Reed-Kontakt 5 angelegt werden muss.

Zur Erzeugung eines Magnetfeldes kann dabei ein kleiner Paramagnet zum Einsatz kommen. Dieser kann dem Servicemitarbeitern zum Zwecke der Wartung und Kontrolle der Füllstände zur Verfügung gestellt werden.

Die verwendeten Bauteile sind mit Schockfestigkeiten von beispielsweise 100 g ausgestattet.

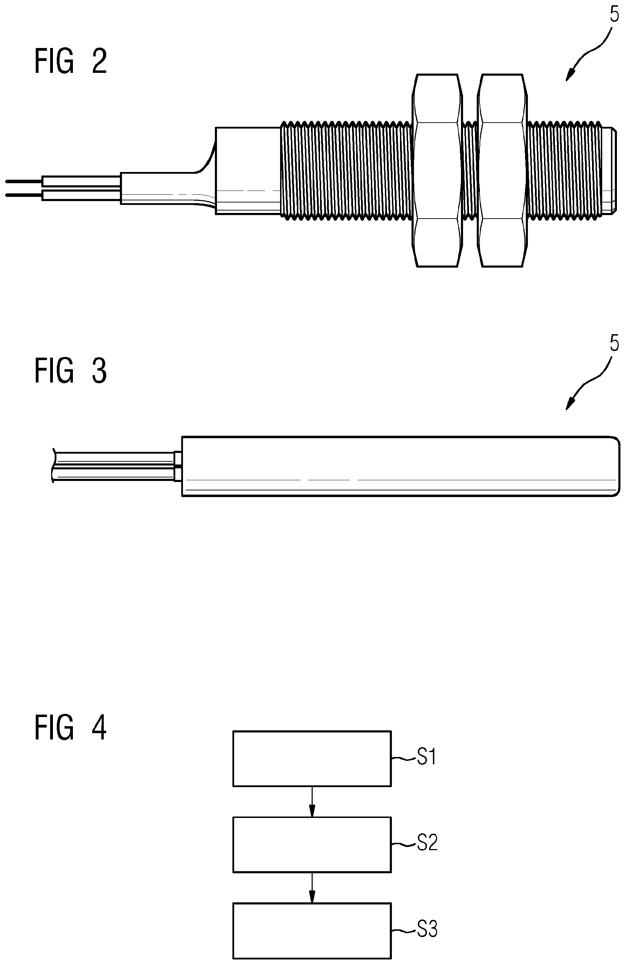

In der Figur 2 und 3 werden verschiedene Ausführungsformen von Reed-Kontakten 5 des Standes der Technik dargestellt. Der in Figur 2 dargestellte Reed-Kontakt 5 ist beispielhaft aus vernickeltem Messing hergestellt. Ferner umfasst der Reed-Kontakt 5 beispielhaft ein M10 Gewinde (nach metrischem ISO-Gewinde) mit Schließer als Kontaktform. Der Reed-Kontakt 5 ist ferner beispielhaft ausgelegt für eine maximale Schaltspannung von 350 V/DC (DC = Gleichspannung) und 300 V/AC (AC = Wechselspannung), einen maximalen Schaltstrom von 0,7 A, eine maximale Schaltscheinleistung 70 VA (VA = Voltampere) und eine maximale Schaltwirkleistung von 50 W.

In der Figur 3 wird ein Reed-Kontakt des Standes der Technik aus einem ABS-Material (ABS = Acrylnitril-Butadien-StyrolCopolymerisat), also einem Kunststoffgemisch, vorgestellt. Er weist dabei beispielhaft lediglich einen Durchmesser von d = 4mm auf und als Kontaktform ebenfalls einen Schließer auf. Er ist ferner beispielhaft ausgelegt für eine maximale Schaltspannung von 180 V/DC (DC = Gleichspannung) und 130 V/AC (AC = Wechselspannung), einen maximalen Schaltstrom von 0,7 A sowie eine maximale Schaltwirkleistung von 10 W.

Typischerweise umfasst ein Reed-Kontakt 5 zwei ferromagnetischen Schaltkontakte, die einen geringen Abstand voneinander aufweisen. Wirkt dann ein axiales Magnetfeld auf den Reed-Kontakt 5, greifen magnetische Kräfte an den Schaltkontakten an und diese bewegen sich aufeinander zu, woraufhin der Reed-Kontakt 5 schließt. Nähere Details beziehungsweise verschiedene Ausführungsformen sind dabei der einschlägigen Fachliteratur zu entnehmen.

In Figur 5 wird das Verfahren zum Ablesen eines Füllstandes eines Fahrzeugs 10 schematisch in Schritten S1, S2, S3 beschrieben. In einem ersten Schritt S1 wird ein Fahrzeug 10 gemäß dem in Figur 4 beschriebenen Ausführungen zur Verfügung gestellt. In einem weiteren Schritt S2 wird der Reed-Kontakt 5 durch ein an den Reed-Kontakt 5 angelegtes Magnetfeld betätigt, wobei dadurch eine Auswerteelektronik 13 und eine Anzeigekomponente 2 eines Anzeigepanels 1 mit einer Spannung versorgt werden. In einem weiteren Schritt S3 erfolgt das Ablesen der einen Anzeigekomponente 2 zum Anzeigen eines Füllstandes.

Zusammengefasst wird ein Fahrzeug 10 mit Anzeigepanel 1 und Anzeigekomponente 2 bereitgestellt, wobei ein Reed-Kontakt 5 derart zur Verfügung gestellt wird, dass der Reed-Kontakt 5 eine zugeordnete Spannungsversorgungsquelle 14 schaltet. Diese Spannungsversorgungsquelle 14 ist geeignet, die Anzeigekomponente 2 und eine einem Füllstandmesser 12 zugeordnete Auswerteelektronik 13 zur Übermittlung des Füllstandes an die Anzeigekomponente 2 mit einer Spannung zu versorgen. Das Anzeigepanel 1 ist bevorzugt an einer Außenseite 15 eines Fahrzeugs 10 befestigt.

Vorteilhaft ergeben sich eine hohe Resistenz gegenüber klimatischen Faktoren wie Schnee, Eis und extreme Temperaturen durch Einsatz des Reed-Kontaktes 5. Dieser ist vorteilhaft in kleinen Bauformen verwendbar und kann somit beispielsweise in das Anzeigepanel 1 integriert werden. Dadurch entstehen keine weiteren Ansatzpunkte für Vandalismus. Ferner wird Energie gespart, da sehr bedarfsorientiert die Spannungsquelle aktiviert wird. Zusätzlich ist die Bedienung von außerhalb des Fahrzeugs möglich. Reed-Kontakte 5 sind zudem robust, einsatzsicher und zudem verhältnismäßig günstig. Ferner kann auch auf aufwendige Schaltungen verzichtet werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen , der durch die beigefügten Ansprüche definiert ist.

## Patentansprüche

1. Ein Fahrzeug (10) umfassend:
- eine Spannungsversorgungsquelle (14) zur Bereitstellung einer elektrischen Spannung;
- einen Füllstandmesser (12) zur Messung eines Füllstandes eines Flüssigkeitsbehälters (11);
- eine Auswerteelektronik (13), die derart ausgebildet ist, dass diese den Füllstand verarbeitet und an ein Anzeigepanel (1) übergibt;
- ein Anzeigepanel (1) zum Anzeigen eines Füllstandes umfassend eine Anzeigekomponente (2) zum Anzeigen eines Füllstandes eines Flüssigkeitsbehälters (11);
**dadurch gekennzeichnet, dass** das Anzeigepanel (1) einen Reed-Kontakt (5) umfasst, der dazu eingerichtet ist, bei Anlegung eines Magnetfelds die Spannungsversorgungsquelle (14) für die Anzeigekomponente (2) und für die Auswerteelektronik (13) des Füllstandmessers (12) zur Messung eines Füllstandes zu schalten.

2. Ein Fahrzeug (10) nach Anspruch 1,
wobei das Anzeigepanel (1) an einer Außenseite (15) des Fahrzeugs (10) angebracht ist.

3. Ein Fahrzeug (1) nach einem der vorherigen Ansprüche, wobei eine zugeordnete Selbsthalteschaltung (17) derart zur Verfügung gestellt wird, dass bei Entfernung des Magnetfelds für eine vorgegebene Wartezeit der einen Anzeigekomponente (2) und der Auswerteelektronik eines zugeordneten Füllstandmessers zur Messung eines Füllstandes eine jeweilige Spannung zur Verfügung gestellt wird.

4. Ein Fahrzeug (1) nach einem der vorherigen Ansprüche, wobei die Anzeigekomponente (2) aus einer Kette von LEDs (3) dargestellt wird.

5. Ein Fahrzeug (10) nach einem der vorherigen Ansprüche, wobei das Anzeigepanel (1) in einem Gehäuse (20) eingebracht ist.

6. Ein Fahrzeug (10) nach Anspruch 5,
wobei das Anzeigepanel (1) als verschraubtes oder vergossenes Schalelement in das Gehäuse (20) eingebracht ist.

7. Ein Fahrzeug (1) nach Anspruch 5 oder 6,
wobei das Anzeigepanel (1) eine transparente Abdeckung (8) aufweist.

8. Ein Verfahren zum Ablesen von einem Füllstand eines Fahrzeugs (10):
a) Bereitstellen eines Fahrzeugs (10) nach einem der vorherigen Ansprüche 1-7;
b) Betätigung des Reed-Kontaktes (5) durch ein an den Reed-Kontakt (5) angelegtes Magnetfeld, wobei dadurch eine Auswerteelektronik (13) und eine Anzeigekomponente (2) eines Anzeigepanels (1) mit einer Spannung versorgt werden;
c) Ablesen der einen Anzeigekomponente (2) zum Anzeigen eines Füllstandes.

9. Ein Verfahren nach Anspruch 8,
wobei das angelegte Magnetfeld durch einen Permanentmagneten erzeugt wird.

## Claims

1. Vehicle (10), comprising:
- a voltage supply source (14) for providing an electrical voltage;
- a filling level meter (12) for measuring a filling level of a liquid container (11);
- an evaluation electronics system (13) which is designed in such a way that it processes the filling level and passes this on to an indicator panel (1);
- an indicator panel (1) for indicating a filling level, comprising an indicator component (2) for indicating a filling level of a liquid container (11);
**characterized in that** the indicator panel (1) comprises a reed contact (5) which, when a magnetic field is applied, is designed to switch the voltage supply source (14) for the indicator component (2) and for the evaluation electronics system (13) of the filling level meter (12) for measuring a filling level.

2. Vehicle (10) according to Claim 1,
wherein the indicator panel (1) is attached to an outer side (15) of the vehicle (10).

3. Vehicle (1) according to either of the preceding claims, wherein an associated self-holding circuit (17) is provided in such a way that, when the magnetic field is removed for a prespecified waiting time, a respective voltage is provided to the one indicator component (2) and the evaluation electronics system of an associated filling level meter for measuring a filling level.

4. Vehicle (1) according to one of the preceding claims, wherein the indicator component (2) is made up of a chain of LEDs (3).

5. Vehicle (10) according to one of the preceding claims, wherein the indicator panel (1) is inserted into a housing (20) .

6. Vehicle (10) according to Claim 5,
wherein the indicator panel (1) is inserted into the housing (20) as a screw-connected or potted mould element.

7. Vehicle (1) according to Claim 5 or 6,
wherein the indicator panel (1) has a transparent cover (8).

8. Method for reading off a filling level of a vehicle (10):
a) providing a vehicle (10) according to one of preceding Claims 1-7;
b) operating the reed contact (5) using a magnetic field applied to the reed contact (5), wherein an evaluation electronics system (13) and an indicator component (2) of an indicator panel (1) are supplied with a voltage in this way;
c) reading off the one indicator component (2) for indicating a filling level.

9. Method according to Claim 8,
wherein the applied magnetic field is produced by a permanent magnet.

## Revendications

1. Véhicule (10) comprenant :
- une source (14) d'alimentation en tension de mise à disposition d'une tension électrique ;
- un dispositif (12) de mesure de niveau pour la mesure d'un niveau de liquide dans un récipient (11) de liquide ;
- une électronique (13) d'exploitation, qui est constituée de manière à traiter ce niveau et à le transmettre à un panneau (1) d'affichage ;
- un panneau (1) d'affichage pour l'affichage d'un niveau, comprenant un composant (2) d'affichage pour l'affichage d'un niveau dans un récipient (11) de liquide ;
**caractérisé en ce que** le panneau (1) d'affichage comprend un contact (5) de Reed, qui est conçu pour, à l'application d'un champ magnétique, mettre en circuit la source (14) d'alimentation en tension du composant (2) d'affichage et de l'électronique (13) d'exploitation du dispositif (12) de mesure de niveau pour la mesure d'un niveau.

2. Véhicule (10) suivant la revendication 1,
dans lequel le panneau (1) d'affichage est mis sur un côté (15) extérieur du véhicule (10).

3. Véhicule (10) suivant l'une des revendications précédentes, dans lequel un circuit (17) associé d'automaintien est mis à disposition, de manière à ce que, lorsque le champ magnétique est retiré, une tension respective soit mise à disposition, pendant un temps d'attente donné à l'avance, du un composant (2) d'affichage et de l'électronique d'exploitation d'un dispositif associé de mesure de niveau pour la mesure d'un niveau.

4. Véhicule (10) suivant l'une des revendications précédentes, dans lequel le composant (2) d'affichage est représenté par une chaîne de LEDs (3).

5. Véhicule (10) suivant l'une des revendications précédentes, dans lequel le panneau (1) d'affichage est logé dans un boîtier (20) .

6. Véhicule (10) suivant la revendication 5,
dans lequel le panneau (1) d'affichage est logé dans le boîtier (20) sous la forme d'un élément de coffrage vissé ou coulé.

7. Véhicule (10) suivant la revendication 5 ou 6,
dans lequel le panneau (1) d'affichage a un recouvrement (8) transparent.

8. Procédé de lecture d'un niveau dans un véhicule (10) dans lequel :
a) on se procure un véhicule (10) suivant l'une des revendications 1 à 7 précédentes ;
b) on actionne le contact (5) de Reed par un champ magnétique appliqué au contact (5) de Reed, dans lequel ainsi une électronique (13) d'exploitation et un composant (2) d'affichage d'un panneau (1) d'affichage sont alimentés en une tension ;
c) on lit le un composant (2) d'affichage pour l'affichage d'un niveau.

9. Procédé suivant la revendication 8, dans lequel on produit le champ magnétique appliqué par un aimant permanent.
